# FASCICULE DE BREVET EUROPEEN

(11) **EP 0 841 239 B1**
(45) Date de publication et mention de la délivrance du brevet: **27.03.2002**
(21) Numéro de dépôt: 97440102.8
(22) Date de dépôt: 07.11.1997
(51) Int. Cl.: B62D 5/06

(54) **Tube rigide pour circuit hydraulique comportant un clapet anti-retour**
Starres Rohr mit Rückschlagventil für einen Hydraulikkreislauf
Rigid tube for a hydraulic circuit containing an antireturn valve

(30) Priorité: 12.11.1996 FR 9613920
(43) Date de publication de la demande: 13.05.1998
(73) Titulaire: Anoflex Société en nom collectif, 69300 Caluire (FR)
(72) Inventeur: Galoselva, Gilles, 69290 Craponne (FR)
(74) Mandataire: Rhein, Alain

(56) Documents cités:
- GB-A- 2 051 714
- US-A- 4 673 051
- US-A- 5 531 287

## Description

L'invention concerne un tube rigide ou un tuyau flexible équipé d'un tube rigide pour circuit hydraulique, tel qu'un système d'assistance de direction de véhicule automobile.

L'invention trouvera son application à chaque fois qu'il conviendra d'implanter un clapet anti-retour dans un circuit hydraulique. Dans ce contexte, l'invention sera d'une utilité toute particulière dans le domaine de l'industrie automobile dès qu'il s'agit de concevoir un système d'assistance de direction.

Un tel système est composé d'un certain nombre d'organes tels qu'une pompe, une valve, un vérin et de tubes rigides ou de tuyaux flexibles raccordant ces différents organes.

Le fait est que ce système d'assistance de direction est sensible aux imperfections du revêtement de la route.

Lesdites imperfections se traduisent par des variations de pression du fluide contenu dans ledit système, entraînant des vibrations ressenties par le conducteur au niveau du volant. Afin de remédier à ce problème, l'art antérieur propose l'utilisation d'un clapet anti-retour disposé dans le circuit hydraulique correspondant à ce système d'assistance de direction. Un tel clapet anti-retour empêche un retour de fluide provoqué par une variation de pression due à la répercussion d'une inégalité du revêtement de la chaussée sur l'essieu directeur.

Ainsi, ce clapet anti-retour est souvent disposé immédiatement à l'entrée ou à la sortie de l'un des organes du système d'assistance de direction. Il peut, aussi, être placé dans un porte-clapet intercalé au niveau, par exemple, d'un flexible de raccordement hydraulique.

A ce propos, on connaît, au travers du document US-4.673.051, un dispositif d'assistance de la direction d'un véhicule automobile. Ce dispositif comporte des tubes à l'intérieur desquels circule un fluide hydraulique. La liaison entre deux de ces tubes se fait au moyen d'un porte-clapet comportant un puits de réception d'un tube lequel est équipé d'un système de raccord à écrou destiné à coopérer avec un filetage ménagé à l'intérieur dudit puits. Dans le fond de ce dernier ainsi qu'au niveau du système de raccord est prévu un logement pour la réception du clapet anti-retour.

Une telle conception est, d'une part, de mise en oeuvre difficile et conduit, d'autre part, à des opérations de montage et d'assemblage longues et fastidieuses.

Ainsi, il y a lieu tout d'abord d'usiner le puits récepteur du tube ainsi que les logements en fonction des caractéristiques dimensionnelles du clapet. Cet usinage est, par conséquent, plus complexe à réaliser et nécessite le respect de tolérances strictes.

La présente invention se propose d'apporter une solution avantageuse aux problèmes précités.

A cet effet, l'invention concerne un tube rigide destiné à être raccordé à un tuyau flexible et/ou à un organe quelconque d'un circuit hydraulique, notamment d'un système d'assistance de direction de véhicule automobile, lequel circuit hydraulique comporte un clapet anti-retour, caractérisé en ce qu'il comporte sur sa longueur et intérieurement, un logement de forme ajustée pour la réception dudit clapet anti-retour.

Les avantages résultant de la présente invention consistent en ce que l'on peut s'affranchir, dans le cas d'un système d'assistance de direction, d'équiper l'un quelconque des organes composant ce dernier du clapet anti-retour, celui-ci prenant position dans l'un des tubes rigides assurant le raccordement hydraulique de ces organes. On notera, au passage, que les monteurs sont, ainsi, soulagés des difficultés rencontrées jusqu'à présent et des contraintes liées au bon positionnement du clapet anti-retour.

En effet, celui-ci est implanté dans ledit tube rigide dès la fabrication et la configuration de ce dernier.

En outre, la configuration des organes du système d'assistance de direction, tout comme les systèmes de raccordement des tubes au niveau de ces organes sont totalement indépendants des caractéristiques du clapet anti-retour. Aussi, tout particulièrement, à un système de raccordement à écrou peut avantageusement être substitué un système de raccordement dit rapide à bride. On observera, à ce propos, qu'un montage à écrou est, d'une manière générale, moins adapté à une éventuelle robotisation, contrairement à des systèmes d'assemblage dont les opérations de montage se décomposent en des mouvements simples et unidirectionnels.

L'invention sera mieux comprise à la lecture de la description qui va suivre se rapportant à un exemple de réalisation illustré dans le dessin joint en annexe.
La figure 1 est une vue schématisée et en coupe partielle d'un tube pré-équipé d'un clapet anti-retour et pourvu à son extrémité d'un système de raccordement à écrou ;
La figure 2 est une vue similaire à la figure 1, ledit tube étant conformé, à son extrémité libre, en forme de nipple pour un sertissage de flexible ;
La figure 3 est une vue similaire à la figure 2, le clapet anti-retour étant disposé au niveau du bourrelet supérieur du nipple équipant l'extrémité du tube à sertir ;
La figure 4 est une vue schématisée et en coupe partielle du raccordement de deux tubes rigides sur l'un quelconque des organes d'un circuit hydraulique, notamment d'un système d'assistance de direction.

L'invention concerne un tube rigide 1 faisant partie d'un circuit hydraulique quelconque, par exemple un système d'assistance de direction de véhicule automobile. Ainsi, ce tube rigide 1 peut être raccordé à un tuyau flexible et/ou à un organe quelconque du circuit hydraulique. Dans le cas d'un système d'assistance de direction, celui-ci se décompose, habituellement, en une pompe, une valve de régulation, et un vérin hydraulique.

L'emploi de l'objet de la présente invention se justifie lorsqu'il y a lieu de contrôler l'écoulement d'un fluide à l'intérieur d'un tube. Un tel problème se rencontre lorsqu'on souhaite contrôler un flux unidirectionnel de fluide, notamment dans le cas d'un retour de fluide lors d'une contre-réaction du système d'assistance de direction. Ceci peut être réalisé grâce à l'utilisation d'un clapet anti-retour 2 disposé sur la trajectoire du fluide.

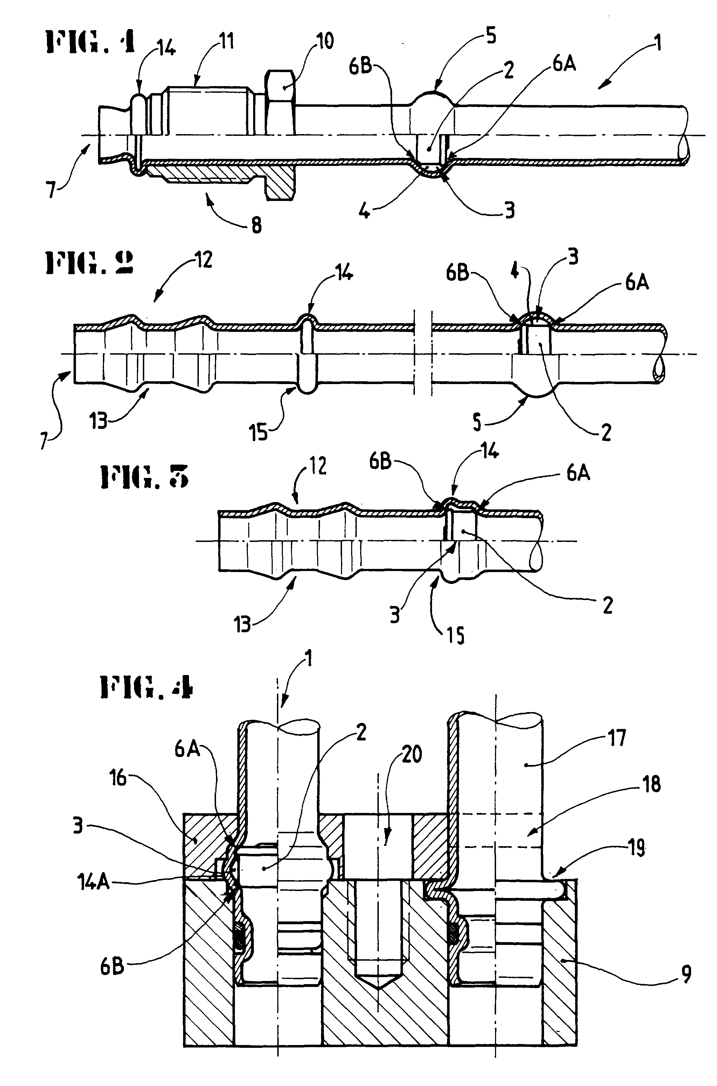

Selon l'invention, tel que représenté dans les figures 1 à 3, le tube rigide 1 comporte sur sa longueur et intérieurement, un logement 3 de forme ajustée pour la réception dudit clapet anti-retour 2.

Ledit logement 3 peut se présenter sous des formes diverses selon le type de réalisation considéré, notamment sous la forme d'une gorge annulaire 4, telle que visible sur les figures 1 et 2, d'où résulte un renflement 5 à la surface du tube rigide 1.

Dans ce cas, le logement 3 est délimité axialement et de part et d'autre par au moins un épaulement radial 6A, 6B. Entre ces épaulements 6A, 6B prend position le clapet anti-retour 2.

Ce dernier est maintenu serré de manière précise sur sa périphérie dans le logement 3. Ainsi, il peut être immobilisé à l'aide des deux épaulements 6A, 6B. Le cas échéant, ce clapet anti-retour 2 peut encore être immobilisé dans le logement 3 par l'intermédiaire de moyens appropriés par exemple à l'aide d'un joint torique, une rondelle ressort ou autre.

Ledit logement 3 peut également se présenter, tout simplement, sous forme d'une portion du tube rigide 1 dont la section interne est strictement ajustée à la section externe du clapet anti-retour 2 autorisant son montage en force.

Il est à noter que ce logement 3 peut être aménagé en un endroit quelconque le long du tube rigide 1 et préférentiellement sur une section rectiligne de ce dernier. Ceci permet, par conséquent, de localiser ledit clapet anti-retour 2 le long du tube rigide 1 de manière à éviter une gêne éventuelle ou encore dans une position déterminée pour l'obtention d'un comportement acoustique optimal de l'ensemble dans lequel s'intègre ce tube rigide 1.

Ledit tube rigide 1 peut être muni, en son extrémité 7, de moyens de raccordement 8 destinés à coopérer avec l'un des organes 9 du circuit hydraulique qui, dans le cas d'une application particulière à un système d'assistance de direction, se présente sous forme d'une pompe, d'une valve ou d'un vérin. Ceci est représenté schématiquement et partiellement sur la figure 4.

Dans l'exemple de réalisation présenté figure 1, les moyens de raccordement 8 sont de type vis-écrou tel que connu dans l'art antérieur. Ce système se présente sous la forme d'un écrou 10 monté sur l'extrémité 7 du tube rigide 1 lequel comporte un bourrelet 14 sur lequel prend appui cet écrou 10. Celui-ci présente à l'une de ses extrémités un embout fileté 11 destiné à coopérer avec un logement taraudé, non représenté, ménagé, par exemple, sur l'un des organes 9 du circuit hydraulique.

La figure 2 représente une variante de réalisation du dispositif précédent dans laquelle le tube rigide 1 comporte toujours, sur sa longueur, un logement 3 destiné à recevoir, de manière identique à la solution représentée figure 1, le clapet anti-retour 2. Ce logement 3 peut être ménagé avantageusement à une distance quelconque de l'extrémité 7 dudit tube 1.

Dans cet exemple de réalisation, l'extrémité de ce tube rigide 1 présente un système de sertissage 12 sous la forme d'un nipple 13 qui représente la partie mâle à sertir, par exemple, dans un tuyau souple. Ledit nipple 13 peut être conformé tel qu'il est connu dans l'art antérieur, notamment dans le brevet français n°2675880. Aussi ce nipple 13 présente un bourrelet 14 définissant un épaulement 15 contre lequel vient en appui l'extrémité de la douille complétant ce système de sertissage 12.

La figure 3 est une vue similaire à la figure 2 dans laquelle le tube rigide 1 est équipé d'un système de sertissage 12 identique. Toutefois, dans ce cas, le logement 3 destiné à recevoir le clapet anti-retour 2 correspond au bourrelet 14 constituant l'épaulement 15 contre lequel la douille du système de sertissage 12 est destinée à prendre appui.

En quelque sorte, on s'aperçoit qu'au cours de l'opération de formage du nipple 13 d'un tel tube rigide 1, qu'il est aisé d'y intégrer simultanément un clapet anti-retour 2 sans que celui-ci ne complique, en quoi que ce soit, le formage dudit tube rigide 1.

D'une manière générale et tel que visible dans la figure 4, le logement 3, défini à l'intérieur du tube rigide 1 et recevant le clapet anti-retour 2, peut contribuer au raccordement de l'extrémité de ce tube rigide 1 sur l'un des organes 9 du circuit hydraulique, notamment du système d'assistance de direction. Ceci est particulièrement le cas lorsque le logement 3 définit un bourrelet 14A en surface de ce tube rigide 1. Ainsi, comme illustré figure 4, sur un tel bourrelet 14A peut prendre appui une bride de fixation 16 que l'on vient visser sur l'organe 9.

Il est à noter que dans le cas d'une telle solution faisant appel à une bride de fixation 16, celle-ci peut être immobilisée en rotation sur ledit tube rigide 1 par des moyens appropriés, au moment même de concevoir le logement 3 du clapet anti-retour 2. Tout particulièrement après avoir engagé la bride de fixation 16 sur le tube rigide 1 et au moment d'expanser celui-ci en son extrémité 7, l'on peut dudgeonner ledit tube 1 dans la bride 16. Par conséquent, la conception du premier épaulement 6A et le dudgeonnage peut résulter d'une seule et même opération de formage du tube rigide 1.

Le fait que le tube rigide 1 soit immobilisé en rotation par rapport à ladite bride 16 permet, de manière avantageuse, lors du montage de l'ensemble sur l'organe 9, de positionner ledit tube rigide 1 angulairement par rapport à ce dernier. Ceci permet de proposer un dispositif prêt à être mis en position sans nécessiter d'ajustement ultérieur sur la chaîne de montage du véhicule.

La solution présentée dans la figure 4 montre deux tubes rigides 1, 17, raccordés à l'organe 9, le premier, 1, intégrant le clapet anti-retour 2 et comportant la bride de fixation 16 assurant, simultanément, le maintien des deux tubes 1, 17 sur cet organe 9.

Une telle bride 16 comporte une excroissance latérale 18 au niveau de laquelle est réalisée une découpe aux dimensions ajustées à la section du second tube rigide 17. De cette manière, cette bride 16 peut être engagée sur ce second tube rigide 17, à l'arrière d'un épaulement 19 équipant ce dernier, une fois celui-ci raccordé à l'organe 9, au moment même du montage du premier tube rigide 1 sur ce dernier.

Il est à noter que le logement 3 destiné à recevoir le clapet anti-retour 2 peut être ménagé indifféremment sur le premier tube rigide 1 ou sur le second tube rigide 17. Par conséquent, ledit clapet anti-retour 2 ainsi que le bourrelet 14A défini par ledit logement 3, peuvent être disposés sur l'un quelconque de ces deux tubes. Aussi, la bride de fixation 16 prenant appui sur ledit bourrelet 14A, peut être indifféremment immobilisée sur le premier tube rigide 1 ou sur l'autre 17.

Finalement, ces deux tubes peuvent être maintenus en position par l'intermédiaire d'une seule vis de fixation 20 traversant la bride de fixation 16 et venant coopérer avec l'organe 9.

Au vu de la description, on constate que la mise en oeuvre de l'invention est non seulement aisée mais facilite considérablement la conception et l'assemblage d'un circuit hydraulique tel qu'un système d'assistance de direction intégrant un clapet anti-retour.

Aussi, l'invention doit être considérée comme représentant un net progrès dans ce domaine.

## Revendications

1. Tube rigide (1) destiné à être raccordé à un tuyau flexible et/ou à un organe quelconque d'un circuit hydraulique, notamment d'un système d'assistance de direction de véhicule automobile, lequel circuit hydraulique comporte un clapet anti-retour (2), **caractérisé en ce qu'**il comporte, en son sein, sur sa longueur et intérieurement, un logement (3) de forme ajustée pour la réception dudit clapet anti-retour (2).

2. Tube rigide (1) selon la revendication 1, **caractérisé par le fait que** le clapet anti-retour (2) est immobilisé dans le logement (3) à l'aide de deux épaulements (6A, 6B) délimitant axialement ce dernier.

3. Tube rigide (1) selon la revendication 1, **caractérisé par le fait que** le clapet anti-retour (2) est immobilisé dans le logement (3) par l'intermédiaire de moyens appropriés tel qu'un joint torique, une rondelle ressort ou autre.

4. Tube rigide (1) selon la revendication 1, **caractérisé par le fait que** le logement (3) se présente sous forme d'une portion du tube rigide (1) dont la section interne est strictement ajustée à la section externe du clapet anti-retour (2) autorisant son montage en force.

5. Tube rigide (1) selon l'une quelconque des revendications précédentes, **caractérisé par le fait que** le logement (3) destiné à la réception du clapet anti-retour (2) est ménagé en un endroit quelconque le long dudit tube rigide (1), préférentiellement sur une section rectiligne de ce dernier.

6. Tube rigide (1) selon l'une quelconque des revendications 1 à 4, comportant à une extrémité un système de sertissage (12) sous la forme d'un nipple (13) présentant un bourrelet (14) définissant un épaulement (15) contre lequel est à même de prendre appui une douille complétant ledit système de sertissage (12), **caractérisé par le fait que** le logement (3) destiné à recevoir le clapet anti-retour (2) correspond au bourrelet (14) constituant l'épaulement (15) contre lequel est destinée à prendre appui ladite douille du système de sertissage (12).

7. Tube rigide (1) selon l'une quelconque des revendications 1 à 4, **caractérisé par le fait que** le logement (3) recevant le clapet anti-retour (2) définit, en surface du tube rigide (1), un bourrelet (14A) sur lequel est à même de prendre appui une bride de fixation (16).

8. Tube rigide (1) selon la revendication 7, **caractérisé par le fait que** la bride de fixation (16) est immobilisée en rotation sur le tube rigide (1).

9. Tube rigide (1) selon les revendications 7 ou 8, **caractérisé par le fait qu'**il est dudgeonné dans la bride de fixation (16) lors de la conception du logement (3) du clapet anti-retour (2) en vue d'immobiliser en rotation ladite bride de fixation (16) sur ledit tube rigide (1).

10. Application du tube rigide (1) tel que caractérisé dans les revendications précédentes à un système d'assistance de direction pour véhicule automobile intégrant un clapet anti-retour (2).

11. Application du tube rigide (1) tel que caractérisé dans les revendications 1 à 9 à un système d'assistance de direction comprenant un organe (9) tel qu'une pompe, une valve, ou un vérin, auquel sont raccordés un premier tube rigide (1) et un second tube rigide (17), le premier tube rigide (1) comportant en surface un bourrelet (14A) correspondant au logement (3) pour la réception du clapet anti-retour (2), sur ce premier tube rigide (1) étant, en outre, montée immobile en rotation, une bride de fixation (16) prenant appui sur le bourrelet (14A) et comportant une excroissance latérale (18) munie d'une découpe aux dimensions ajustées à la section du second tube rigide (17) autorisant l'engagement de cette bride de fixation (16) sur ce second tube rigide (17) à l'arrière d'un épaulement (19) équipant ce dernier, ceci lors du raccordement de ces tubes rigides (1) et (17) sur l'organe (9) dudit système d'assistance de direction.

## Patentansprüche

1. Steifes Rohr (1) zur Verbindung mit einem biegsamen Rohr und/oder irgendeinem Organ eines Hydraulikkreises, nämlich eines Hilfskraft-Lenkungssystems eines Kraftfahrzeugs, welcher Hydraulikkreis eine Rückschlagklappe (2) umfaßt, **dadurch gekennzeichnet, daß** es in seinem Innneren und über seine Länge einen Hohlraum (3) einer zum Aufnehmen der genannten Rückschlagklappe (2) angepaßten Form umfaßt.

2. Steifes Rohr (1) nach Anspruch 1, **dadurch gekennzeichnet, daß** die Rückschlagklappe (2) im Hohlraum (3) mittels zwei Ansätze (6A, 6B), die diesen letzten achsial begrenzen, festgeklemmt wird.

3. Steifes Rohr (1) nach Anspruch 1, **dadurch gekennzeichnet, daß** die Rückschlagklappe (2) im Hohlraum (3) über geeignete Mittel, wie einen O-ring, eine Federscheibe oder dergleichen, festgeklemmt wird.

4. Steifes Rohr (1) nach Anspruch 1, **dadurch gekennzeichnet, daß** die Rückschlagklappe (3) als ein Teil des Steifes Rohres (1) ausgestaltet ist, dessen innerer Querschnitt dem äußeren Querschnitt der Rückschlagklappe (2) genau angepaßt ist, was ihre gezwungene Montage erlaubt.

5. Steifes Rohr (1) nach irgendeinem der vorgehenden Ansprüche, **dadurch gekennzeichnet, daß** der Hohlraum (3) zur Aufnahme der Rückschlagklappe (2) an irgendeiner Stelle entlang den genannten steifen Rohr (1), vorzugsweise auf einem geradlinigen Abschnitt dieses letzten, vorgesehen ist.

6. Steifes Rohr (1) nach irgendeinem der Ansprüche 1 bis 4, umfassend an einem Ende ein Fassungssystem (12), das als ein Nippel (13) ausgestaltet ist, der einen Wulst (14) aufweist, der einen Ansatz (15) definiert, an den eine Büchse, die dieses Fassungssystem (12) ergänzt, anlehnen kann, **dadurch gekennzeichnet, daß** der Hohlraum (3) zur Aufnahme der Rückschlagklappe (2) dem Wulst (14) entspricht, der den Ansatz (15) bildet, an den die genannte Büchse des Fassungssystems (12) anlehnen können muß.

7. Steifes Rohr (1) nach irgendeinem der Ansprüche 1 bis 4, **dadurch gekennzeichnet, daß** der Hohlraum (3), der die Rückschlagklappe (2) aufnimmt, an der Oberfläche des steifen Rohres (1) einen Wulst (14A) definiert, an den ein Befestigungsflansch (16) anlehnen kann.

8. Steifes Rohr (1) nach Anspruch 7, **dadurch gekennzeichnet, daß** der Befestigungsflansch (16) drehfest an dem steifen Rohr (1) befestigt ist.

9. Steifes Rohr (1) nach Anspruch 7 oder 8, **dadurch gekennzeichnet, daß** es während der Herstellung des Hohlraums (3) für die Rückschlagklappe (2) im Befestigungsflansch (16) eingewalzt wird, um den genannten Befestigungsflansch (16) drehfest an dem genannten steifen Rohr (1) zu befestigen.

10. Anwendung des steifen Rohres (1), wie dieses in den vorgehenden Ansprüchen gekennzeichnet ist, für ein Hilfskraft-Lenkungssystem eines Kraftfahrzeugs, in dem eine Rückschlagklappe (2) integriert ist.

11. Anwendung des steifen Rohres (1), wie dieses in den Ansprüchen 1 bis 9 gekennzeichnet ist, für ein Hilfskraft-Lenkungssystem, das ein Organ (9), wie eine Pumpe, ein Ventil oder eine Winde, umfaßt, an dem ein erstes steifes Rohr (1) und ein zweites steifes Rohr (17) angeschlossen sind, wobei das erste steife Rohr (1) an dessen Oberfläche einen Wulst (14A) umfaßt, der dem Hohlraum (3) zur Aufnahme der Rückschlagklappe (2) entspricht, wobei an diesem ersten steifen Rohr (1) außerdem ein Befestigungsflansch (16) drehfest befestigt ist, der an den Wulst (14A) anlehnt und einen seitlichen Auswuchs (18) umfaßt, der mit einem Ausschnitt versehen ist, dessen Abmessungen dem Querschnitt des zweiten steifen Rohres (17) angepaßt sind, was das Aufstecken dieses Befestigungsflansches (16) auf diesen zweiten steifen Rohr (17) erlaubt, hinter einem Ansatz (19), mit dem dieses letzte versehen ist, und zwar während der Verbindung dieser steifen Rohre (1) und (17) mit dem Organ (9) des genannten Hilfskraft-Lenkungssystems.

## Claims

1. Rigid pipe (1) for being connected to a flexible pipe and/or any organ of a hydraulic circuit, viz. of a power-assisted steering system of a motor vehicle, which hydraulic system includes a non-return valve (2), **characterised in that** it includes in it, over its length and internally, a recess (3) of a shape adapted for receiving said non-return valve (2).

2. Rigid pipe (1) according to claim 1, **characterised in that** the non-return valve (2) is immobilised in the recess (3) by means of two shoulders (6A, 6B) delimiting the latter axially.

3. Rigid pipe (1) according to claim 1, **characterised in that** the non-return valve (2) is immobilised in the recess (3) through adequate means, such as an O-ring, a spring washer or the like.

4. Rigid pipe (1) according to claim 1, **characterised in that** the recess (3) is in the form of a portion of the rigid tube (1) the inner cross-section of which is strictly adapted to the outer cross-section of the non-return valve (2), authorising its forced fitting.

5. Rigid pipe (1) according to any of the preceding claims, **characterised in that** the recess (3) for receiving the non-return valve (2) is provided for at any location alongside said rigid tube (1), preferably on a rectilinear segment of the latter.

6. Rigid pipe (1) according to any of claims 1 through 4, including, at one end, a crimping system (12) in the form of a nipple (13) having a rim (14) defining a shoulder (15) against which a bushing completing said crimping system (12) is capable of resting, **characterised in that** the recess (3) for receiving the non-return valve (2) corresponds to the rim (14) forming the shoulder (15) against which said bushing of the crimping system (12) is aimed at resting.

7. Rigid pipe (1) according to any of claims 1 through 4, **characterised in that** the recess (3) receiving the non-return valve (2) defines, at the surface of the rigid tube (1), a rim (14A) against which a fastening flange (16) is capable of resting.

8. Rigid pipe (1) according to claim 7, **characterised in that** the fastening flange (16) is immobilised in rotation on the rigid tube (1).

9. Rigid pipe (1) according to claim 7 or 8, **characterised in that** it is beaded in the fastening flange (16) during the carrying out of the recess (3) for the non-return valve (2), in order to immobilise said fastening flange (16) in rotation on said rigid tube (1).

10. Application of the rigid tube (1) as **characterised in** the preceding claims to a power-assisted steering system of a motor vehicle integrating a non-return valve (2).

11. Application of the rigid tube (1) as **characterised in** claims 1 to 9 to a power-assisted steering system including an organ (9), such as a pump, a valve or a jack, to which a first rigid tube (1) and a second rigid tube (17) are connected, the first rigid tube (1) including, at its surface, a rim (14A) corresponding to the recess (3) for receiving the non-return valve (2), on this first rigid tube (1) being fitted in addition, immobilised in rotation, a fastening flange (16) resting on the rim (14A) and including a side excrescence (18) provided with a cut-out the dimensions of which are adapted to the cross-section of the second rigid tube (17), authorising the insertion of this fastening flange (16) onto this second rigid tube (17) behind a shoulder (19) the latter is provided with, this during the connection of these rigid tubes (1) and (17) to the organ (9) of said power-assisted steering system.
